# EUROPEAN PATENT SPECIFICATION

(11) **EP 1 296 484 B1**
(45) Date of publication and mention of the grant of the patent: **14.09.2005**
(21) Application number: 02254666.7
(22) Date of filing: 03.07.2002
(51) Int. Cl.: H04L 12/28, H04L 12/403, H04L 12/413

(54) **Data communications method using backoff number control and a station for carrying out the method**
Verfahren zur Datenkommunikation mittels Steurung durch eine Backoff Nummer und eine Station zur Durchführung des Verfahrens
Procédé de communication de données utilisant un contrôle de nombres "backoff" et station pour appliquer la méthode

(30) Priority: 20.09.2001 KR 2001058361
(43) Date of publication of application: 26.03.2003
(73) Proprietor: SAMSUNG ELECTRONICS CO., LTD., Kyungki-do (KR)
(72) Inventor: Jang, Kyung-hun, 134-1702 Hwanggol Maeul, Suwon-city, Kyungki-do (KR); Kang, Woo-shik, 422-1603 Cheongmyeong, Paldal-gu, Suwon-city, Kyungki-do (KR)
(74) Representative: Greene, Simon Kenneth

(56) References cited:
- EP-A- 0 483 546
- EP-A- 0 652 523
- EP-A- 0 994 604
- US-A- 4 988 989
- DENG D-J ET AL: "A PRIORITY SCHEME FOR IEEE 802.11 DCF ACCESS METHOD" IEICE TRANSACTIONS ON COMMUNICATIONS, INSTITUTE OF ELECTRONICS INFORMATION AND COMM. ENG. TOKYO, JP, vol. E82-B, no. 1, January 1999 (1999-01), pages 96-102, XP000927880 ISSN: 0916-8516

## Description

The present invention relates to a centralized data transmission method using a carrier sense multiplexing access (CSMA) method, and more particularly, to a data transmission method in which an access point transmits data by transmitting a multi-poll message using the CSMA method.

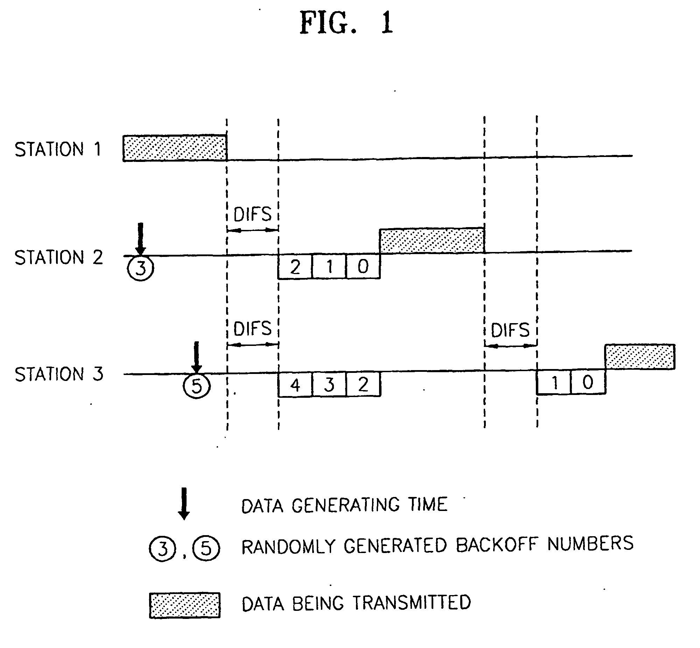

FIG. 1 is a diagram showing a prior art approach for transmitting data using a distributed coordination function (DCF) method for centralized data communications using a carrier sense multiplexing access (CSMA) method.

In a CSMA centralized data communications system using such as a wireless LAN system based on IEEE 802.11, in order to minimize contention, each station generates a random backoff number. Then, if the channel is idle more than a predetermined time (DCF Inter Frame Space, DIFS), the station decreases successively the backoff number, and if the backoff becomes 0, the station transmits data. This is referred to as a DCF method. Here, the backoff number is randomly generated between the minimum value (CWmin) and the maximum value (CWmax) of a contention window (CW) determined by an access point.

Referring to FIG. 1, station 1 transmits data, the backoff numbers of station 2 and station 3 are 3 and 5, respectively. One DIFS after station 1 ends data transmission, the backoff number of station 2 is counted down, and data is transmitted. When data of station 2 is transmitted, counting down of the backoff number of station 3 is stopped. One DIFS after station 2 ends data transmission, the remaining backoff number of station 2 is counted down, and when the backoff number becomes 0, data is transmitted.

Since the DCF method works on a probability basis, there is a high possibility of contention between data transmitted by stations. Also, since the number and size of data packets are not controlled by the access points, it is difficult to support time-limited services.

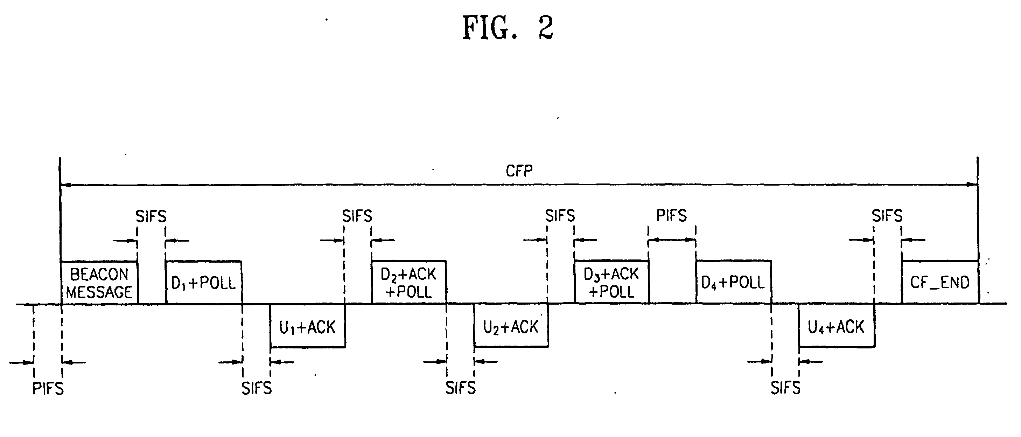

FIG. 2 is a diagram showing a prior art data transmission method using a point coordination function (PCF), in which a contention free period (CFP) can be controlled by an access point is set, and transmission opportunities are provided to each station based on a polling method. This will be referred to as a point coordination function (PCF) method. In the PCF method, PCF Inter Frame Space (PIFS) and Short Inter Frame Space (SIFS) that are shorter than the DIFS are used instead of the DIFS in order to obtain priority over DCF-using stations.

However, in wireless LAN systems, for example, Intersil and ATmel, the PCF function is not offered due to the complexity of implementation.

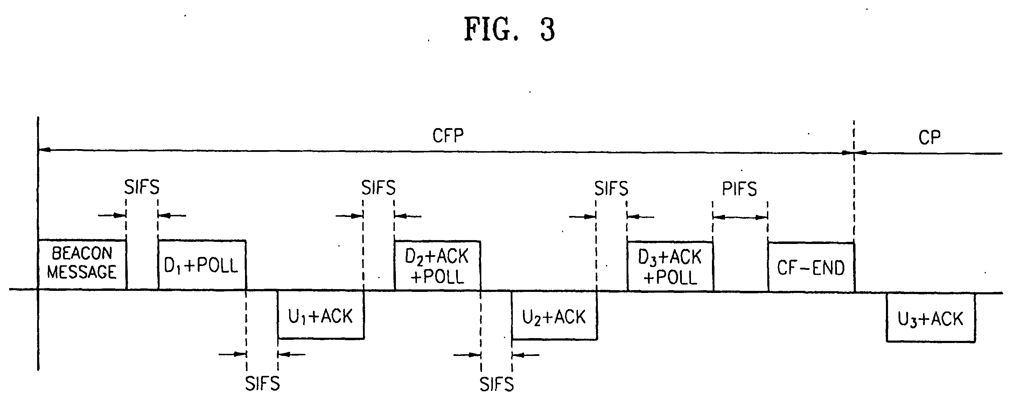

FIG. 3 is a diagram showing a data transmission method of a centralized data communications system using the CSMA, in which contention period (CP) intervals and contention free period (CFP) intervals are mixed and used together.

A beacon message contains information on CFP intervals or CP intervals, or beacon message intervals. One SIFS interval after one station ends data transmission, an access point transmits a polling message (D1 + Poll, D2 + ack + Poll, D3 + ack + Poll).

The DCF method is used during the CP interval, while the PCF method is used during the CFP interval. Since the DCF method depends on transmission opportunity obtaining based on probability, it is difficult to support time-limited services. Therefore, polling stations using the PCF method during the CFP interval allow time-limited services. However, in the PCF method, a polling message should be transmitted whenever polling stations is performed, and additional timing management for the CFP intervals is needed. Thus, implementation is complicated.

Also, since the CFP interval is fixed, data transmitted by a polled station may exceed the CFP interval. In this case the station has to give up the PCF transmission, and transmit data in a CP interval on a contention basis. For example, when stations that received polling messages transmit data and a confirmation message (U1 + ack, U2 + ack or U3 + ack) to confirm the transmission of data, a station which desires to transmit U3 data cannot transmit the data in the CFP interval and has to transmit them in the CP interval.

If a polled station is to transmit continuous fragmented data, and if a data item exceeds the CFP interval, the station has to transmit the data during the CP interval. In addition, it is necessary to adjust the lengths of a transmission frame and a CFP interval in order to practically support time-limited services, and for some services, if very short interval polling is requested, polling in the CP interval as well as polling in the CFP interval will be needed. To solve this, the length of a transmission frame should be shorter than a corresponding polling cycle interval.

EP 994604 describes a backoff based access priority method in which random backoff values are assigned. The random values may be selected from a range determined by priority information.

EP 652523 describes a remote monitoring system having a central monitoring station storing the numbers of stations having a polling level of at least two. The polling level may be varied depending on the importance of the data.

EP 483546 describes methods for polling mobile users. A polling table allocates time slots for each user to transmit.

According to the invention, there is provided a CSMA data transmission method using a backoff number control in a centralized data communications system formed with an access point and stations, as set out in claim 1.

The present invention thus provides a data transmission method using a backoff number control.

The invention also provides a computer readable recording medium having the data transmission method therein.

The advantages of the present invention will become more apparent by the description in detail of preferred embodiments with reference to the attached drawings in which:
FIG. 1 is a diagram showing a prior art approach for transmitting data using distributed coordination function (DCF) method for centralized data communications using a carrier sense multiplexing access (CSMA) method;
FIG. 2 is a diagram showing a method for polling with a point coordination function (PCF) in prior art centralized data communications using the CSMA method;
FIG. 3 is a diagram showing a data transmission method in which contention period (CP) intervals and contention free period (CFP) intervals are mixed and used together;
FIG. 4 is a flowchart showing a data transmission method using a backoff number control according to the present invention;
FIG. 5 is a diagram of a data transmission frame for a data transmission method using a backoff number control according to the present invention;
FIG. 6 is a diagram of the structure of a multi-poll message for a data transmission method using a backoff number control according to the present invention; and
FIG. 7 is a diagram of a preferred embodiment of a data transmission method using a backoff number control according to the present invention.

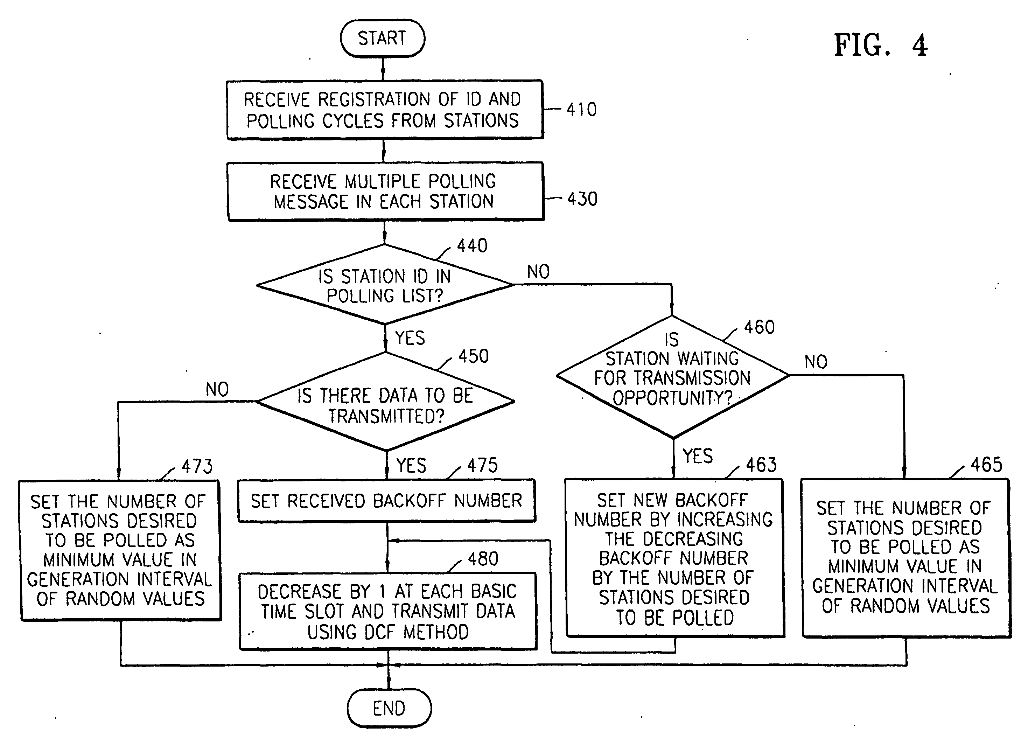

FIG. 4 is a flowchart showing a data transmission method using a backoff number control in a CSMA centralized data communications system according to the present invention, in which if an access point transmits a multi-poll message, the stations receive the message, set backoff numbers, and transmit data according to the backoff numbers.

Each station registers information containing a station ID and a polling cycle to the access point in step 410. The access point calculates the lengths of transmission frames based on the registered polling cycles, and randomly generates backoff numbers. Here, assuming that the interval of random values is within a contention window (CW), the access point sets the backoff numbers. From the information registered in step 410, the access point transmits a multi-poll message containing the number of stations that want polling, the IDs of those stations, or backoff numbers to be assigned to the stations.

Each station receives the multi-poll message transmitted by the access point in step 430. If the station ID is in the polling list of the multi-poll message in step 440, and if the station has data desired to be transmitted in step 450, the station sets a backoff number in the received multi-poll message corresponding to the ID of the station in step 475 to prepare to transmit data. The station which set the backoff number in step 475 transmits data using the DCF method by decreasing the backoff number at each basic time slot in step 480. If there is no data to be transmitted in step 450, the number of stations that want polling is set as the minimum value in a contention window in step 473, and then if there is data to be transmitted, a backoff number which is randomly generated between the minimum value and the maximum value in the Contention Window set in step 473 and is transmitted by the access point is received and set, and data is transmitted.

When the ID of the station is not in the polling list of the received multi-poll message in step 440, and the station is waiting to obtain a transmission opportunity in step 460, the decreasing backoff number is increased by the number of stations desired to be polled, and a new backoff number is set in step 463, and by decreasing the new backoff number by 1 at each basic time slot, data is transmitted using the DCF method in step 480. When the ID of the station is not in the polling list of the received multi-poll message in step 440 and the station is not waiting to obtain a transmission opportunity in step 460, the number of stations desired to be polled is set as the minimum value in a contention window in step 465, and then, if there is data to be transmitted, a backoff number which is randomly generated between the minimum number and the maximum number in the contention window set in step 465 and is transmitted by the access point is received and set, and data is transmitted.

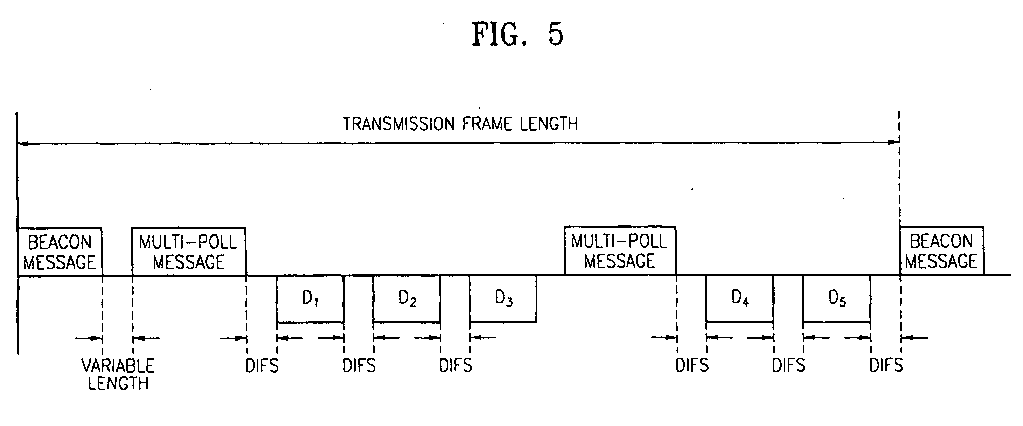

FIG. 5 is a diagram of the structure of a data transmission frame for a data transmission method according to the present invention. A transmission frame is formed with beacon message information containing the interval of CP or the interval of a beacon message transmitted by the access point, a multi-poll message, and data transmitted by each station. The time interval between a beacon message and a multi-poll message is variable, and the time interval for transmitting each data (D1 through D5) is a DIFS. The time when a polling message is transmitted is variable, because the polling cycle registered by each station is confirmed and according to the cycle, the polling message is transmitted. Also, since a plurality of multi-poll messages can be transmitted in one transmission frame interval (length), the polling interval is also variable.

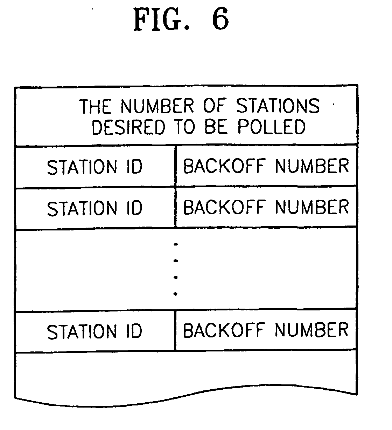

FIG. 6 is a diagram of the structure of a multi-poll message for a data transmission method according to the present invention, in which the number of stations that want polling, and the ID and backoff number of each station are included.

If the access point transmits a multi-polling message having the structure shown in FIG. 6 during an interval which is shorter than a DIFS, after a beacon message is transmitted, each station sets a backoff number corresponding to the ID of the station, and then transmits data in a DIFS interval.

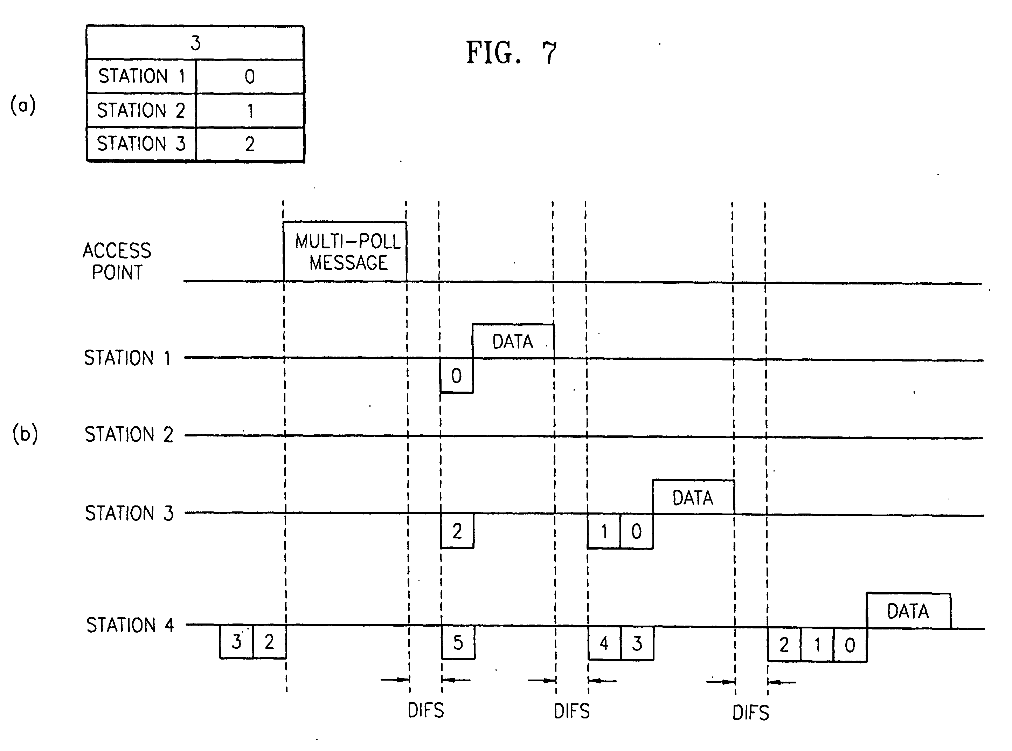

FIG. 7a is an embodiment of a multi-poll message according to the present invention. Since the number of stations that want polling is 3, backoff numbers 0, 1, and 2 are assigned to stations 1, 2, and 3, respectively.

FIG. 7b is a diagram of a data transmission method according to the present invention, showing an embodiment of a station transmitting data.

Referring to FIGS. 7a and 7b, the embodiment will now be explained.

If an access point transmit a multi-poll message as shown in FIG. 7a, stations 1 through 4 receive the multi-poll message, check registered IDs and backoff numbers, set assigned backoff numbers and then transmit data.

Since the backoff number of station 1 is 0, station 1 can have a transmission opportunity immediately after receiving the multi-poll message. If the channel becomes idle a DIFS interval after station 1 ends data transmission, stations excluding station 1 decrease backoff numbers by 1 at each basic time slot, and therefore, station 2 of which backoff number becomes 0 obtains a transmission opportunity. However, since station 2 has no data to be transmitted, the channel is still idle. Since the channel is also idle for a basic time slot at this time, stations excluding stations 1 and 2 decrease the backoff numbers by 1. Then, station 3 obtains the next transmission opportunity. Since station 4 which was not in the polling list increased its backoff number up to the number of stations that want polling, when the multi-poll message is received, station 4 cannot obtain a transmission opportunity in the polling cycle. Here, the polling cycle indicates the interval between multi-poll messages.

Thus, the access point can always perform polling of the stations such that time-limited services can be effectively supported.

The present invention may be embodied in a code, which can be read by a computer, on a computer readable recording medium. The computer readable recording medium includes all kinds of recording apparatuses on which computer readable data are stored. The computer readable recording media includes storage media such as magnetic storage media (e.g., ROM's, floppy disks, hard disks, etc.), optically readable media (e.g., CD-ROMs, DVDs, etc.) and carrier waves (e.g., transmissions over the Internet). Also, the computer readable recording media can be scattered among computer systems connected through a network and can store and execute a computer readable code in a distributed mode. Also, the structure of data or a database required in performing the method according to the present invention may be recorded in the recording medium as described above and by operating the computer program, desired functions and effects may be obtained.

According to the present invention as described above, the data transmission method using a backoff number control in a CSMA centralized data communications system is applied for controlling media access of a wireless LAN or Home PNA such that time-limited services can be supported. Also, with simple implementation, the method can be easily applied to existing systems such that the method can support real time service in low priced systems.

## Claims

1. A carrier-sense multiple access data transmission method using a backoff number control formed with an access point and stations, the method comprising:
(a) receiving (430) in the stations a multi-poll message from the access point, the multi-poll message containing backoff numbers to be assigned to each station in a polling list;
(b) setting (475) the backoff numbers in the stations in the polling list to be the corresponding backoff numbers of the multi-poll message; and
(c) counting down (480) the set backoff numbers in the stations by reducing the backoff numbers every time the channel is idle for a predetermined time; and transmitting data.

2. The method of claim 1, further comprising:
registering (410) to the access point the IDs and polling cycles of stations that are to be polled.

3. A data transmission method according to claim 1 or 2 in each station, if the station is in the polling list, setting the backoff number to be the corresponding backoff number (475) of the station in the multi-poll message;
if the station is not in the polling list but is waiting for a transmission opportunity, setting (463) a new backoff number by increasing the backoff number of the station by the number of stations in the polling list; and
transmitting data (480) when the backoff number is zero.

4. The method of claim 1, 2 or 3, wherein in step (a) the multi-poll message contains at least one of the number of stations that are to be polled, the IDs of those stations, and the backoff numbers of the stations.

5. The method of claim 4, wherein the multi-poll message contains the IDs of the stations to be polled, and the backoff numbers of those stations, the method including in step (b) checking in the stations the ID of the station against the IDs of the stations in the multi-poll message and if the station ID is in the multi-poll message setting the backoff number of the station to be the backoff number in the multi-poll message corresponding to the station.

6. The method of any preceding claim, wherein in step (c) the set backoff number is counted down and when the backoff number becomes 0, data is transmitted.

7. The method of any preceding claim, further comprising the step of, in a station having no data to be transmitted among the stations to be polled, randomly setting (473) a backoff number using the number of stations that are to be polled as the minimum value in an interval of random values to be generated.

8. The method of any preceding claim, further comprising the step of, in a station which is not among the stations that are to be polled but which waits to obtain a transmission opportunity, resetting (463) the backoff number to a value obtained by adding the number of stations that want polling to the backoff number.

9. The method of any preceding claim, further comprising the step of, in a station which is not to be polled and which does not wait to obtain a transmission opportunity, randomly setting (465) a backoff number using the number of stations that are to be polled as the minimum value in an interval of random values to be generated.

10. A computer readable medium having embodied thereon a computer program arranged to cause a station in a communication system to transmit data with an access point using a method of any one of claims 1 through 9.

## Patentansprüche

1. Datenübertragungsverfahren mit Vielfachzugriff und Leitungsüberwachung (CSMA, carrier sense multiple access) unter Verwendung einer Steuerung mit Backoffzahl gebildet mit einem Zugriffspunkt und Stationen, wobei das Verfahren umfasst:
(a) Empfangen (430) einer Multipollmeldung in den Stationen vom Zugriffspunkt, wobei die Multipollmeldung Backoffzahlen enthält, die jeder Station in einer Pollingliste zuzuordnen ist;
(b) Einstellen (475) von Backoffzahlen in den Stationen in der Pollingliste als die entsprechenden Backoffzahlen der Multipollmeldung; und
(c) Herunterzählen (480) der eingestellten Backoffzahlen in den Stationen durch Reduzieren der Backoffzahlen, immer wenn der Kanal über eine bestimmte Zeit unbenutzt ist; und Übertragen von Daten.

2. Verfahren nach Anspruch 1, ferner umfassend:
Registrieren (410) der IDs und Pollingzyklen der Stationen zum Polling am Zugriffspunkt.

3. Datenübertragungsverfahren nach Anspruch 1 oder 2 in jeder Station, wenn die Station in der Pollingliste ist, Einstellen der Backoffzahl als die entsprechende Backoffzahl (475) der Station in der Multipollmeldung;
wenn die Station nicht in der Pollingliste ist, aber auf eine Übertragungsmöglichkeit wartet, Einstellen (463) einer neuen Backoffzahl durch Erhöhen der Backoffzahl der Station um die Zahl der Stationen in der Pollingliste; und
Übertragen von Daten (480), wenn die Backoffzahl null beträgt.

4. Verfahren nach Anspruch 1, 2 oder 3, worin in Schritt (a) die Multipollmeldung mindestens eine Anzahl von Stationen zum Polling enthält, die IDs dieser Stationen und die Backoffzahlen der Stationen.

5. Verfahren nach Anspruch 4, worin die Multipollmeldung die IDs der Stationen zum Polling enthält und die Backoffzahlen dieser Stationen, wobei das Verfahren in Schritt (b) beinhaltet: Überprüfen der Stations-ID gegen die Stations-IDs in der Multipollmeldung in den Stationen und wenn die Stations-ID in der Multipollmeldung ist, Einstellen der Backoffzahl der Station als die Backoffzahl in der Multipollmeldung entsprechend der Station.

6. Verfahren nach einem der vorhergehenden Ansprüche, worin in Schritt (c) die eingestellte Backoffzahl heruntergezählt wird und wenn die Backoffzahl 0 wird, werden Daten übertragen.

7. Verfahren nach einem der vorhergehenden Ansprüche, ferner umfassend den Schritt, in einer Station unter den Stationen zum Polling, die keine Daten zu übertragen aufweist, statistisches Einstellen (473) einer Backoffzahl unter Verwendung der Anzahl der Stationen zum Polling als den Minimalwert in einem Intervall von statistischen Werten, die erzeugt werden sollen.

8. Verfahren nach einem der vorhergehenden Ansprüche, ferner umfassend den Schritt, in einer Station, die nicht unter den Stationen ist, die zum Polling vorgesehen sind, die aber darauf wartet, eine Übertragungsmöglichkeit zu erhalten, Zurücksetzen (463) der Backoffzahl auf einen Wert, der durch Addieren der Anzahl der Stationen, die Polling wünschen, zur Backoffzahl erhalten wird.

9. Verfahren nach einem der vorhergehenden Ansprüche, ferner umfassend den Schritt, in einer Station, die nicht zum Polling vorgesehen ist und die nicht darauf wartet, eine Übertragungsmöglichkeit zu erhalten, statistisches Einstellen (465) einer Backoffzahl unter Verwendung der Anzahl der Stationen zum Polling als Minimalwert in einem Intervall von statistischen Werten, die erzeugt werden sollen.

10. Computerlesbares Medium mit einem darauf ausgeführten Computerprogramm, das so angeordnet ist, dass es eine Station in einem Kommunikationssystem veranlasst, Daten zu übertragen mit einem Zugriffspunkt unter Verwendung eines Verfahrens nach einem der Ansprüche 1 bis 9.

## Revendications

1. Procédé de transmission de données par accès multiple avec détection de porteuse, utilisant un contrôle de nombres d'attente (backoff) formé avec un point d'accès et des stations, le procédé comprenant :
(a) la réception (430) dans les stations d'un message à invitations à émettre multiples provenant du point d'accès, le message à invitations à émettre multiples contenant des nombres d'attente devant être attribués à chaque station dans une liste d'invitation à émettre ;
(b) l'établissement (475) des nombres d'attente dans les stations dans la liste d'invitation à émettre devant être les nombres d'attente correspondants du message à invitations à émettre multiples ; et
(c) le décomptage (480) des nombres d'attente établis dans les stations en réduisant les nombres d'attente chaque fois que le canal est libre pendant un temps prédéterminé ; et la transmission des données.

2. Procédé selon la revendication 1, comprenant en outre :
◆ l'enregistrement (410) au point d'accès des IDs et cycles d'invitation à émettre des stations qui doivent être invitées à émettre.

3. Procédé de transmission de données dans chaque station selon la revendication 1 ou 2, si la station est dans la liste d'invitation à émettre, **caractérisé en ce que** l'on établit le nombre d'attente devant être le nombre d'attente correspondant (475) de la station dans le message à invitations à émettre multiples ;
◆ si la station n'est pas dans la liste d'invitation à émettre mais attend une opportunité de transmission, on établit (463) un nouveau nombre d'attente en augmentant le nombre d'attente de la station par le nombre de stations dans la liste d'invitation à émettre ; et
◆ on transmet les données (480) lorsque le nombre d'attente est zéro.

4. Procédé selon la revendication 1, 2 ou 3, dans lequel à l'étape (a) le message à invitations à émettre multiples contient au moins une station parmi le nombre qui doivent être invitées à émettre, les IDs de ces stations, et les nombres d'attente des stations.

5. Procédé selon la revendication 4, dans lequel le message à invitations à émettre multiples contient les IDs des stations devant être invitées à émettre, et les nombres d'attente de ces stations, le procédé comprenant à l'étape (b) la vérification dans les stations de l'ID de la station par rapport aux IDs des stations dans le message à invitations à émettre multiples et si l'ID de la station est dans le message à invitations à émettre multiples, l'établissement du nombre d'attente de la station devant être le nombre d'attente dans le message à invitations à émettre multiples correspondant à la station.

6. Procédé selon l'une quelconque des revendications précédentes, dans lequel à l'étape (c) le nombre d'attente établi est décompté et lorsque le nombre d'attente devient 0, les données sont transmises.

7. Procédé selon l'une quelconque des revendications précédentes, comprenant en outre l'étape consistant à, dans une station n'ayant pas de données à transmettre parmi les stations devant être invitées à émettre, établir aléatoirement (473) un nombre d'attente en utilisant le nombre de stations, qui doivent être invitées à émettre, comme valeur minimum dans un intervalle de valeurs aléatoires devant être générées.

8. Procédé selon l'une quelconque des revendications précédentes, comprenant en outre l'étape consistant à, dans une station qui n'est pas parmi les stations qui doivent être invitées à émettre mais qui attend d'obtenir une opportunité de transmission, réinitialiser (463) le nombre d'attente à une valeur obtenue en ajoutant le nombre de stations qui veulent inviter à émettre au nombre d'attente.

9. Procédé selon l'une quelconque des revendications précédentes, comprenant en outre l'étape consistant à, dans une station qui ne doit pas être invitée à émettre et qui n'attend pas d'obtenir une opportunité de transmission, établir aléatoirement (465) un nombre d'attente en utilisant le nombre de stations qui doivent être invitées à émettre comme valeur minimum dans un intervalle de valeurs aléatoires devant être générées.

10. Support lisible sur ordinateur incorporant un programme informatique conçu pour faire qu'une station dans un système de communication transmette des données avec un point d'accès en utilisant un procédé selon l'une quelconque des revendications 1 à 9.
